# EUROPEAN PATENT APPLICATION

(11) **EP 4 632 700 A1**
(43) Date of publication of application: **15.10.2025**
(21) Application number: 23899933.8
(22) Date of filing: 04.12.2023
(51) Int. Cl.: G07C 1/24, G07C 5/02, G01S 19/42, G01S 19/43

(54) **RACETRACK TIMING METHOD AND SYSTEM, APPARATUS, STORAGE MEDIUM, AND VEHICLE**

(30) Priority: 07.12.2022 CN 202211566728
(71) Applicant: Wuhan Lotus Cars Co., Ltd., Wuhan, Hubei 430056 (CN)
(72) Inventor: YU, Hao, Wuhan, Hubei 430056 (CN); CHEN, Yue, Wuhan, Hubei 430056 (CN); WANG, Pengwu, Wuhan, Hubei 430056 (CN); LI, Nen, Wuhan, Hubei 430056 (CN)
(74) Representative: Barker Brettell LLP
(86) International application number: PCT/CN2023/136271
(87) International publication number: WO 2024/120357

(57) **Abstract**

The present application provides a racetrack timing method, which is used in a vehicle and includes: a vehicle-mounted positioner obtaining vehicle position information regarding a current position of the vehicle in real time, and sending the vehicle position information to a vehicle-mounted controller, the vehicle-mounted controller determining whether the vehicle position information matches a preset racetrack timing position at a preset racetrack; and the vehicle-mounted controller performing a timing operation once the vehicle position information matches the preset racetrack timing position. The present application further provides a racetrack timing system, an apparatus, a storage medium, and a vehicle.

## Description

### TECHNICAL FIELD

The present application relates to the field of racetrack timing, specifically to a racetrack timing method, system and apparatus, a storage medium and a vehicle.

### BACKGROUND

The current systems used for racetrack timing mainly achieve accurate timing of the racecars on the racetrack through the use of radio frequency identification technology or infrared recognition technology. For racing competitions or events, the timing accuracy of the racetrack timing systems needs to reach the level of 0.001 seconds. However, for racetrack timing systems using these two technologies, it is necessary to carry out certain hardware investments and configurations at racetrack sides or in racetrack infrastructure projects, as well as certain manual operations of the racing timing system (such as starting, ending, and statistical results, etc.) to meet the actual user requirements. It can be seen that in order to meet people's growing interest in racing, lower-cost, more convenient and more efficient solutions are needed.

### SUMMARY

In order to solve the above problems, the present invention proposes a racetrack timing method, which can improve the convenience of racetrack timing and reduce the use cost of racetrack timing while ensuring the accuracy of racetrack timing.

The present invention provides a racetrack timing method, which is used in a vehicle and includes: obtaining, by a vehicle-mounted positioner, vehicle position information regarding a current position of the vehicle in real time, and sending the vehicle position information to a vehicle-mounted controller; determining, by the vehicle-mounted controller, whether the vehicle position information matches a preset racetrack timing position at a preset racetrack; and performing, by the vehicle-mounted controller, a timing operation once the vehicle position information matches the preset racetrack timing position.

In an implementation, after the obtaining, by the vehicle-mounted positioner, the vehicle position information regarding the current position of the vehicle in real time, and sending the vehicle position information to the vehicle-mounted controller includes: determining, by the vehicle-mounted controller, whether the vehicle is located within a preset racing track range according to the vehicle position information; obtaining, by the vehicle-mounted controller, preset racetrack information in the preset racing track when it is determined that the vehicle is located within the preset racing track range, and obtaining the preset racetrack timing position at the preset racetrack according to the preset racetrack information.

In an implementation, before the determining, by the vehicle-mounted controller, whether the vehicle position information matches the preset racetrack timing position at the preset racetrack, the method further includes: determining, by the vehicle-mounted controller, whether the vehicle is located within a preset racing track range according to the vehicle position information; where a position of the preset racetrack is within the preset racing track range; and performing the step of determining, by the vehicle-mounted controller, whether the vehicle position information matches the preset racetrack timing position at the preset racetrack if it is determined that the vehicle is located within the preset racing track range.

In an implementation, the method includes: adjusting, by the vehicle-mounted controller, the preset racetrack timing position according to an acquired racetrack timing position adjustment instruction; where the racetrack timing position adjustment instructions includes at least one of the following: a racetrack timing position adjustment instruction sent by a competition timing terminal in a racing track, a racetrack timing position adjustment instruction input by a vehicle-mounted display screen, a racetrack timing position adjustment instruction sent by a remote server, and a racetrack timing position adjustment instruction saved by the vehicle-mounted controller after being updated by means of software upgrade.

In an implementation, the method further includes: obtaining, by the vehicle-mounted controller, a racetrack timing position adjustment instruction, and adjusting the preset racetrack timing position according to the racetrack timing position adjustment instruction.

In an implementation, the obtaining, by the vehicle-mounted controller, the racetrack timing position adjustment instruction includes at least one of the following: receiving, by the vehicle-mounted controller, the racetrack timing position adjustment instruction sent by a competition timing terminal; or receiving, by the vehicle-mounted controller, the racetrack timing position adjustment instruction input by a user based on a vehicle-mounted display screen; or receiving, by the vehicle-mounted controller, the racetrack timing position adjustment instruction sent by a remote server. Or, the racetrack timing position adjustment instruction may also be updated to the vehicle by means of software upgrade, and saved by the vehicle-mounted controller after updating.

In an implementation, before the determining, by the vehicle-mounted controller, whether the vehicle position information matches the preset racetrack timing position at the preset racetrack, the method further includes: determining, by the vehicle-mounted controller, whether the vehicle meets a preset condition; and controlling, by the vehicle-mounted controller, the vehicle to enter a racetrack driving mode if the vehicle meets the preset condition; the preset condition includes at least one of the following: the vehicle being located within a preset racing track range, the vehicle receiving a trigger signal for the racetrack driving mode, and the vehicle receiving a preset starting signal. In another implementation, before the determining, by the vehicle-mounted controller, whether the vehicle position information matches the preset racetrack timing position at the preset racetrack, the vehicle-mounted controller does not need to determine whether the vehicle meets the above preset condition.

In an implementation, the preset racetrack timing position includes a preset racetrack starting position; the performing, by the vehicle-mounted controller, the timing operation once the vehicle position information matches the preset racetrack timing position includes: after a current racetrack driving mode is activated, starting, by the vehicle-mounted controller, timing if the vehicle position information matches the preset racetrack starting position in the preset racetrack for the first time.

In an implementation, the preset racetrack timing position includes a preset racetrack ending position, and the method further includes: ending, by the vehicle-mounted controller, timing when the vehicle position information matches the preset racetrack ending position; or, after a current racetrack driving mode is activated, ending, by the vehicle-mounted controller, timing when the vehicle position information matches the preset racetrack ending position for the Nth time, where N is an integer greater than 1.

In an implementation, the preset racetrack timing position further includes a preset turn timing position and/or a preset road section timing position, and the method further includes: obtaining, by the vehicle-mounted controller, timing data of the vehicle according to a timing time when the vehicle position information matches the preset racetrack timing position; where the timing data includes at least one of a single turn consuming time of the vehicle, a total racetrack consuming time of the vehicle, and a consuming time spent by the vehicle on each road section.

In an implementation, the preset racetrack information further includes racetrack boundary information, and the method further includes: determining, by the vehicle-mounted controller, whether the vehicle exceeds a racetrack boundary according to the racetrack boundary information and a moving trajectory of the vehicle during a timing period; and executing a prompt operation or an invalid operation if the vehicle exceeds the racetrack boundary, where the prompt operation may be, for example, a sound prompt, a display screen prompt, or an information prompt, etc., and the invalid operation may be to regard a consuming time taken by the vehicle on a preset road section and/or a grade of the vehicle during a current timing period and/or a current single turn consuming time of the vehicle as an invalid grade.

The present invention also provides a storage medium, storing a computer program, where the computer program, when executed by a processor, implements the steps of the racetrack timing method as described above.

The present invention also provides a racetrack timing system, including: a vehicle-mounted positioner, a control unit and a cockpit host; where the vehicle-mounted positioner is configured to obtain vehicle position information regarding a current position of a vehicle in real time, and send the vehicle position information to the control unit; the control unit includes an underlying router and a main controller, where the underlying router is configured to send the vehicle position information to the main controller or the vehicle-mounted controller, and the main controller is configured to process the vehicle position information and send the processed vehicle position information to the vehicle-mounted controller; the cockpit host includes a vehicle-mounted controller and a vehicle-mounted displayer, where the vehicle-mounted controller is configured to determine whether the vehicle position information or the processed vehicle position matches a preset racetrack timing position at a preset racetrack, perform a timing operation once the vehicle position information or the processed vehicle position matches the preset racetrack timing position, obtain timing data of the vehicle according to a timing time when the vehicle position information or the processed vehicle position matches the preset racetrack timing position, and send the timing data to the vehicle-mounted displayer, where the vehicle-mounted displayer is configured to display the timing data.

The present invention also provides a racetrack timing system, used in a vehicle, and including: a vehicle-mounted positioner, configured to obtain vehicle position information regarding a current position of the vehicle in real time, and send the vehicle position information to a vehicle-mounted controller; and the vehicle-mounted controller, configured to determine whether the vehicle position information matches a preset racetrack timing position at a preset racetrack; and perform a timing operation once the vehicle position information matches the preset racetrack timing position.

The present invention also provides a racetrack timing apparatus, used in a vehicle, and including: a positioning module, configured to obtain vehicle position information regarding a current position of the vehicle in real time; and a control module, configured to determine whether the vehicle position information matches a preset racetrack timing position at a preset racetrack; the control module is further configured to perform a timing operation once the vehicle position information matches the preset racetrack timing position.

The present invention also provides a vehicle, including the racetrack timing system as described above.

The racetrack timing method, system and apparatus, the storage medium and the vehicle provided by the present invention obtains the vehicle position information regarding the current position of the vehicle in real time, performs the timing operation once the vehicle position information matches the preset racetrack timing position, which can obtain the vehicle's racetrack usage time according to a matching time between the vehicle position information and each preset racetrack timing position, thereby improving the convenience of racetrack timing and reducing the use cost of racetrack timing while ensuring the racetrack timing accuracy.

### BRIEF DESCRIPTION OF DRAWINGS

FIG. 1 is a structural schematic diagram of a racetrack timing system provided by a first embodiment of the present invention.
FIG. 2 is a structural schematic diagram of a racetrack timing system provided by a second embodiment of the present invention.
FIG. 3 is a flow chart of a racetrack timing method provided by a third embodiment of the present invention.
FIG. 4 is a schematic diagram of a preset racetrack timing position provided by the third embodiment of the present invention.
FIG. 5 is a schematic diagram of a timing data display provided by the third embodiment of the present invention.
FIG. 6 is a structural schematic diagram of a racetrack timing apparatus shown by a fourth embodiment of the present invention.

### DESCRIPTION OF EMBODIMENTS

The aforementioned and other technical contents, features and effects of the present invention will be clearly presented in the following detailed description of the preferred embodiments with reference to the drawings. Through the description of the specific implementation embodiments, a deeper and more specific understanding can be obtained of the technical means and effects adopted by the present invention to achieve the predetermined purpose. However, the drawings are only for reference and illustration purposes and are not used to limit the present invention.

In order to further explain the technical means and effects adopted by the present invention to achieve the predetermined invention purpose, the present invention is described in detail below in conjunction with the drawings and preferred embodiments.

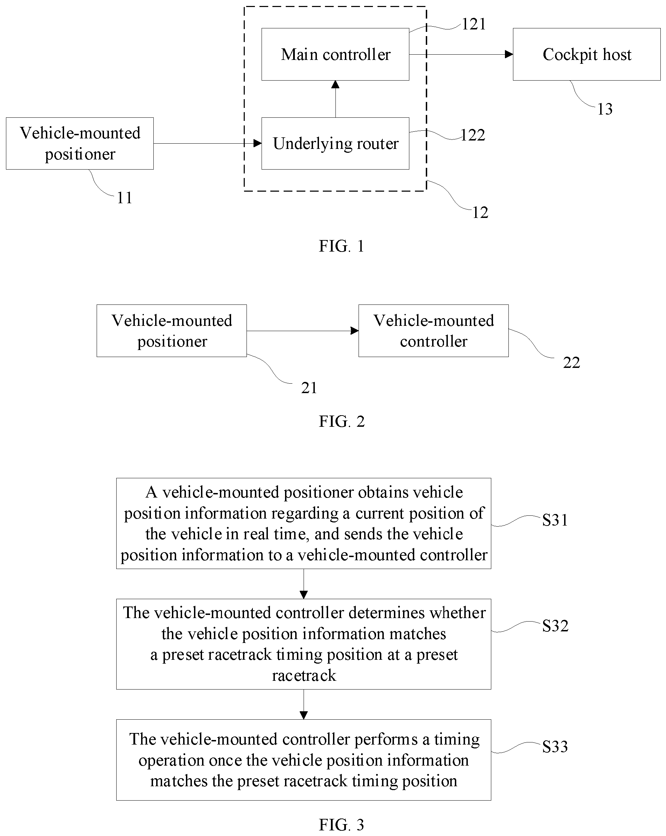

FIG. 1 is a structural schematic diagram of a racetrack timing system provided by a first embodiment of the present invention, and a racetrack timing method provided in the embodiment of the present application is implemented based on the system architecture.

As shown in FIG. 1, the racetrack timing system provided in this embodiment includes a vehicle-mounted positioner 11, a control unit 12 and a cockpit host 13.

The vehicle-mounted positioner 11 is configured to obtain vehicle position information regarding a current position of a vehicle in real time, and send the obtained vehicle position information to the control unit 12, where the vehicle position information obtained by the vehicle-mounted positioner 11 is original vehicle position information without bias.

The control unit 12 includes a underlying router 122 and a main controller 121, where the underlying router 122 is configured to forward the vehicle position information sent by the vehicle-mounted positioner 11 to the main controller 121, or directly send the vehicle position information to the cockpit host 13 when the main controller 121 breaks down; the main controller 121 is configured to perform bias processing on the vehicle position information to obtain the vehicle position information after bias processing, and obtain a movement trajectory of the vehicle, and send the vehicle position information after bias processing and the movement trajectory of the vehicle to the cockpit host 13. In another embodiment, it is not necessary for the main controller 121 to perform bias processing on the vehicle position information.

Specifically, in an implementation, the underlying router 122 sends the vehicle position information to a communication antenna, and the vehicle position information is sent to a competition timing terminal or other vehicles via the communication antenna.

The cockpit host 13 includes the vehicle-mounted controller and a vehicle-mounted displayer, where the vehicle-mounted controller is configured to determine whether the vehicle position information or the vehicle position after bias processing matches a preset racetrack timing position at a preset racetrack, perform a timing operation once the vehicle position information or the vehicle position after bias processing matches the preset racetrack timing position, obtain timing data of the vehicle according to a timing time when the vehicle position information or the vehicle position after bias processing matches the preset racetrack timing position, and send the obtained timing data to the vehicle-mounted displayer; where the vehicle-mounted displayer is configured to display the timing data.

The racetrack timing system provided by the present invention obtains the vehicle position information regarding the current position of the vehicle in real time, performs the timing operation once the vehicle position information matches the preset racetrack timing position, which can obtain the vehicle's racetrack usage time according to a matching time between the vehicle position information and each preset racetrack timing position, thereby improving the convenience of racetrack timing and reducing the use cost of racetrack timing while ensuring the racetrack timing accuracy.

FIG. 2 is a structural schematic diagram of a racetrack timing system provided by a second embodiment of the present invention. As shown in FIG. 2, the racetrack timing system provided in the embodiment of the present application includes a vehicle-mounted positioner 21 and a vehicle-mounted controller 22.

The vehicle-mounted positioner 21 is configured to obtain vehicle position information regarding a current position of a vehicle in real time, perform bias processing on the vehicle position information, and send the vehicle position after bias processing to the vehicle-mounted controller 22. In another embodiment, the vehicle-mounted positioner 21 does not need to perform bias processing on the vehicle position information, and directly send the vehicle position information to the vehicle-mounted controller 22.

The vehicle-mounted controller 22 is configured to determine whether the vehicle position after bias processing matches a preset racetrack timing position at a preset racetrack, perform a timing operation once the vehicle position after bias processing matches the preset racetrack timing position, obtain timing data of the vehicle according to a timing time when the vehicle position after bias processing matches the preset racetrack timing position.

The racetrack timing system provided by the present invention obtains the vehicle position information regarding the current position of the vehicle in real time, performs the timing operation once the vehicle position information matches the preset racetrack timing position, which can obtain the vehicle's racetrack usage time according to a matching time between the vehicle position information and each preset racetrack timing position, thereby improving the convenience of racetrack timing and reducing the use cost of racetrack timing while ensuring the racetrack timing accuracy.

FIG. 3 is a flow chart of a racetrack timing method provided by a third embodiment of the present invention.

As shown in FIG. 3, the racetrack timing method provided by this embodiment includes the following steps.

Step S31: a vehicle-mounted positioner obtains vehicle position information regarding a current position of the vehicle in real time, and sends the vehicle position information to a vehicle-mounted controller.

Specifically, the vehicle-mounted positioner obtains the vehicle position information regarding the current position of the vehicle by means of fusion of Real-time Kinematic (referred to as RTK) and Inertial Measurement Unit (referred to as IMU), and/or obtains the vehicle position information regarding the current position of the vehicle through a single/multi-satellite Global Navigation Satellite System (referred to as GNSS), and/or obtains the vehicle position information regarding the current position of the vehicle through a Global Positioning System (referred to as GPS).

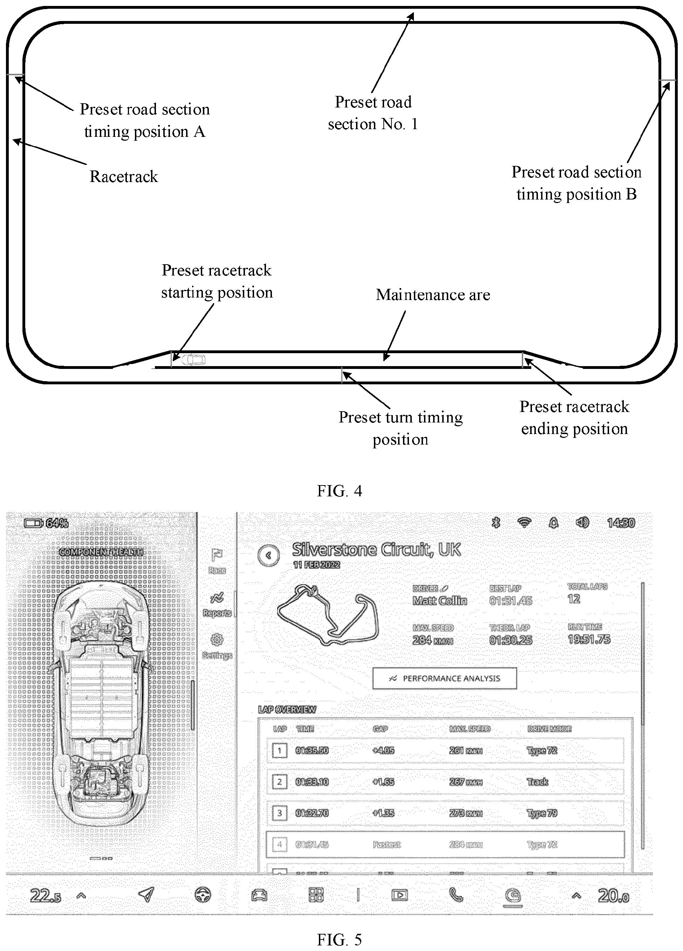

Specifically, after step S31, the vehicle-mounted controller determines whether the vehicle is currently located within a preset racing track range according to the vehicle position information sent by the vehicle-mounted positioner. When it is determined that the vehicle is currently located within the preset racing track, the vehicle-mounted controller obtains preset racetrack information in the preset racing track, and obtains the preset racetrack timing position at the preset racetrack according to the preset racetrack information. The preset racetrack timing position includes at least one of a preset racetrack starting position, a preset racetrack ending position, a preset turn timing position, and a preset road section timing position as shown in FIG. 4. The preset racetrack starting position, the preset racetrack ending position, and the preset turn timing position can be the same position. Preferably, the vehicle-mounted controller can use GPS positioning information to determine whether the vehicle is currently located within the preset racing track range, so as to reduce resource usage during the determination. The preset racing track range may be a range of a closed racing track, a range of a non-closed racing track, or a road preset by the user by itself.

Specifically, in an implementation, when obtaining the preset racetrack timing position at the preset racetrack, or after obtaining the preset racetrack timing position at the preset racetrack, the vehicle-mounted controller adjusts the preset racetrack timing position according to a racetrack timing position adjustment instruction sent by a competition timing terminal in a racing track, and/or a racetrack timing position adjustment instruction input by a vehicle-mounted display screen, and/or a racetrack timing position adjustment instruction sent by a remote server, and/or a racetrack timing position adjustment instruction saved by the vehicle-mounted controller after being updated by means of software upgrade. The racetrack timing position adjustment instruction saved by the vehicle-mounted controller is a racetrack timing position adjustment instruction saved by the vehicle-mounted controller after the racetrack timing position adjustment instruction is updated to the vehicle by means of software upgrade (i.e. OTA).

Specifically, in an implementation, the vehicle-mounted controller adjusts the preset racing track range and/or the preset racetrack information according to information sent by the competition timing terminal in the racetrack, and/or information sent by the server, and/or information input by any vehicle-mounted terminal or any data interface, and/or information stored locally.

Step S32: the vehicle-mounted controller determines whether the vehicle position information matches a preset racetrack timing position at a preset racetrack.

Specifically, before step S32, the vehicle-mounted controller determines whether the vehicle meets a preset condition. When the vehicle meets the preset condition, the vehicle-mounted controller controls the vehicle to enter a racetrack driving mode, where the preset condition includes at least one of the following: the vehicle being located within a preset racing track range, the vehicle receiving a trigger signal for the racetrack driving mode, and the vehicle receiving a preset starting signal. In another implementation, before step S32, the vehicle-mounted controller does not need to determine whether the vehicle meets the above preset condition, but directly determine whether the vehicle position information matches the preset racetrack timing position at the preset racetrack.

Specifically, the vehicle-mounted controller determines whether the vehicle position information intersects with the preset racetrack timing position based on the vehicle position information obtained by means of RTK+IMU fusion or the vehicle position information obtained by means of GNSS+IMU fusion. If so, it is determined that the vehicle position information matches the preset racetrack timing position.

Step S33: the vehicle-mounted controller performs a timing operation once the vehicle position information matches the preset racetrack timing position.

Specifically, after a racetrack driving mode is activated, the vehicle-mounted controller starts timing if the vehicle position information matches the preset racetrack starting position for the first time; after the vehicle-mounted controller starts timing, the vehicle-mounted controller ends timing if the vehicle position information matches the preset racetrack ending position or the vehicle position information matches the preset racetrack ending position for the Nth time, where N is an integer greater than 1.

Specifically, in an implementation, after the vehicle-mounted controller starts timing, the vehicle-mounted controller ends timing when the vehicle position information matches the preset racetrack starting position for the Nth time, where N is an integer greater than 1.

Specifically, the timing operation can be to record a current time, for example, if the time when the vehicle position information matches the preset racetrack timing position is 1:01:01:12 milliseconds on January 1, 2022, the vehicle-mounted controller records the time when the vehicle position information matches the preset racetrack timing position as 1:01:01:12 milliseconds on January 1, 2022. The timing operation can also be to record a time from the time starting timing to the current time, that is, the time start timing is 0 seconds, if the vehicle position information matches the preset racetrack timing position at the 6th second after the time starting timing, the vehicle-mounted controller records the time when the vehicle position information matches the preset racetrack timing position as 6 seconds.

Specifically, step S33: further includes obtaining, by the vehicle-mounted controller, timing data of the vehicle according to a timing time when the vehicle position information matches the preset racetrack timing position. For example, please combine with the reference of FIG. 4, the matching time of vehicle position information and the preset turn timing position as well as preset road section timing positions A and B each time is obtained during the timing period; the single turn consuming time of the vehicle can be obtained according to the first and second matching times between the vehicle position information and the preset turn timing position; in a condition that the vehicle does not enter a maintenance area during the competition, a total racetrack consuming time of the vehicle can be obtained based on the matching time of the vehicle position information and the preset racetrack starting position as well as the preset racetrack ending position, or directly based on a time difference of the first matching time of the vehicle position information and the preset racetrack starting position with the time when the timing ends; a consuming time taken by the vehicle in preset road section No. 1 can also be obtained based on a matching time between the vehicle position information and the preset road section timing position A and a matching time between the vehicle position information and the preset road section timing position B.

Specifically, in an implementation, the racetrack is divided into a plurality of preset road sections according to the preset racetrack timing position, and the consuming time taken for the vehicle to pass through each preset road section is obtained according to the timing time when the vehicle position information matches the preset racetrack timing position.

Specifically, in an implementation, the vehicle-mounted controller fuses the timing data of the vehicle and the movement trajectory of the vehicle during the timing period to obtain racetrack data of the vehicle during the timing period.

Specifically, in an implementation, the preset racetrack information further includes racetrack boundary information. When it is determined that the vehicle exceeds a racetrack boundary according to the racetrack boundary information and the movement trajectory of the vehicle during the timing period, a consuming time taken by the vehicle on a preset road section and/or a grade of the vehicle during a current timing period and/or a current single turn consuming time of the vehicle are regarded as an invalid grade, and corresponding out-of-bound and/or invalid grade prompt information is generated.

Specifically, in an implementation, the number of times the vehicle exceeds the racetrack boundary is identified based on the racetrack boundary information and the movement trajectory of the vehicle during the timing period. A consuming time taken by the vehicle in the corresponding preset road section or turn is increased according to the number of times the vehicle exceeds the racetrack boundary, the number of times the vehicle exceeds the racetrack boundary is recorded, and corresponding penalty time prompt information is generated.

Specifically, after obtaining the timing data of the vehicle, the vehicle-mounted controller sends the timing data to the vehicle-mounted displayer, so that the vehicle-mounted displayer displays the timing data. For specific display effects, please refer to the timing data display diagram of FIG.5.

Specifically, in an implementation, after acquiring the racetrack data and/or timing data, the vehicle-mounted controller shares the racetrack data and/or timing data with a vehicle on the same racetrack or a bound vehicle, and/or sends the racetrack data and/or timing data to the competition timing terminal, and/or uploads the racetrack data and/or timing data to the server.

It is worth mentioning that since the vehicle position information obtained by means of the RTK+IMU fusion method has centimeter-level positioning accuracy and high positioning frequency, the present invention can obtain the precise time when the vehicle arrives at each preset racetrack timing position the vehicle position information obtained by means of RTK+IMU. Even when the vehicle position information cannot be obtained by means of RTK+IMU, the present invention can also obtain the vehicle position information of the vehicle by means of GNSS+IMU, and obtain the precise time when the vehicle arrives at each preset racetrack timing position according to the vehicle position information of GNSS+IMU.

The racetrack timing method provided by the present invention obtains the vehicle position information regarding the current position of the vehicle in real time, performs the timing operation once the vehicle position information matches the preset racetrack timing position, which can obtain the vehicle's racetrack usage time according to a matching time between the vehicle position information and each preset racetrack timing position, thereby improving the convenience of racetrack timing and reducing the use cost of racetrack timing while ensuring the racetrack timing accuracy.

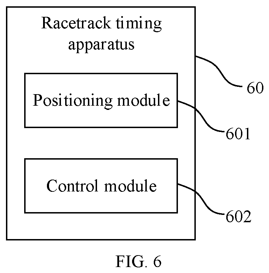

FIG. 6 is a structural schematic diagram of a racetrack timing apparatus shown by a fourth embodiment of the present invention. As shown in FIG.6, the racetrack timing apparatus 60 includes the following modules.

A positioning module 601, configured to obtain vehicle position information regarding a current position of the vehicle in real time.

In an implementation, the positioning module 601 performs bias processing on the obtained vehicle position information.

A control module 602, configured to determine whether the vehicle position information or the vehicle position information after bias processing matches a preset racetrack timing position at a preset racetrack. The control module 602 is further configured to perform a timing operation once the vehicle position information or the vehicle position information after bias processing matches the preset racetrack timing position at the preset racetrack.

Regarding the specific definition of the racetrack timing apparatus of the present embodiment, please refer to the definition of the racetrack timing method in the above embodiments, and will not be repeated here. Each module in the above racetrack timing apparatus can be fully or partially implemented by software, hardware or a combination thereof. The above modules may be embedded in or independent of a processor in a computer device in a form of hardware, or may be stored in a memory in a computer device in a form of software, so that the processor can call and execute operations corresponding to the above modules.

The present invention also provides a storage medium, storing a computer program, where the computer program, when executed by a processor, implements the steps of the racetrack timing method as described above.

The present invention also provides a vehicle, including the racetrack timing system and/or the racetrack timing apparatus as described above.

The racetrack timing method, system and apparatus, the storage medium and the vehicle provided by the present invention obtains the vehicle position information regarding the current position of the vehicle in real time, performs the timing operation once the vehicle position information matches the preset racetrack timing position, which can obtain the vehicle's racetrack usage time according to a matching time between the vehicle position information and each preset racetrack timing position, thereby improving the convenience of racetrack timing and reducing the use cost of racetrack timing while ensuring the racetrack timing accuracy.

The above are only preferred embodiments of the present invention, and are not intended to limit the present invention in any form. Although the present invention has been disclosed as preferred embodiments as above, it is not intended to limit the present invention. Any person skilled with the present profession can make some changes or modifications to equivalent embodiments of equivalent changes through the technical contents disclosed above without departing from the scope of the technical solution of the present invention. However, any simple modifications, equivalent changes and modifications made to the above embodiments based on the technical essence of the present invention without departing from the content of the technical solution of the present invention are still within the scope of the technical solution of the present invention. Therefore, the protection scope of the present invention should be determined by the appended claims.

## Claims

1. A racetrack timing method, used in a vehicle, and comprising:
obtaining, by a vehicle-mounted positioner, vehicle position information regarding a current position of the vehicle in real time, and sending the vehicle position information to a vehicle-mounted controller;
determining, by the vehicle-mounted controller, whether the vehicle position information matches a preset racetrack timing position at a preset racetrack; and
performing, by the vehicle-mounted controller, a timing operation once the vehicle position information matches the preset racetrack timing position.

2. The racetrack timing method according to claim 1, before the determining, by the vehicle-mounted controller, whether the vehicle position information matches the preset racetrack timing position at the preset racetrack, further comprising:
determining, by the vehicle-mounted controller, whether the vehicle is located within a preset racing track range according to the vehicle position information; wherein a position of the preset racetrack is within the preset racing track range; and
performing the step of determining, by the vehicle-mounted controller, whether the vehicle position information matches the preset racetrack timing position at the preset racetrack if it is determined that the vehicle is located within the preset racing track range.

3. The racetrack timing method according to claim 1, further comprising:
obtaining, by the vehicle-mounted controller, a racetrack timing position adjustment instruction, and adjusting the preset racetrack timing position according to the racetrack timing position adjustment instruction.

4. The racetrack timing method according to claim 3, wherein the obtaining, by the vehicle-mounted controller, the racetrack timing position adjustment instruction comprises at least one of the following:
receiving, by the vehicle-mounted controller, the racetrack timing position adjustment instruction sent by a competition timing terminal; or
receiving, by the vehicle-mounted controller, the racetrack timing position adjustment instruction input by a user based on a vehicle-mounted display screen; or
receiving, by the vehicle-mounted controller, the racetrack timing position adjustment instruction sent by a remote server; or
saving, by the vehicle-mounted controller, the racetrack timing position adjustment instruction after the racetrack timing position adjustment instruction is updated to the vehicle by means of software upgrade.

5. The racetrack timing method according to claim 1, before the determining, by the vehicle-mounted controller, whether the vehicle position information matches the preset racetrack timing position at the preset racetrack, further comprising: determining, by the vehicle-mounted controller, whether the vehicle meets a preset condition; and
controlling, by the vehicle-mounted controller, the vehicle to enter a racetrack driving mode if the vehicle meets the preset condition;
the preset condition comprises at least one of the following:
the vehicle being located within a preset racing track range, or the vehicle receiving a trigger signal for the racetrack driving mode, or the vehicle receiving a preset starting signal.

6. The racetrack timing method according to claim 1, wherein the preset racetrack timing position comprises a preset racetrack starting position;
the performing, by the vehicle-mounted controller, the timing operation once the vehicle position information matches the preset racetrack timing position comprises:
after a current racetrack driving mode is activated, starting, by the vehicle-mounted controller, timing if the vehicle position information matches the preset racetrack starting position in the preset racetrack for the first time.

7. The racetrack timing method according to claim 1, wherein the preset racetrack timing position comprises a preset racetrack ending position, and the method further comprises:
ending, by the vehicle-mounted controller, timing when the vehicle position information matches the preset racetrack ending position;
or, after a current racetrack driving mode is activated, ending, by the vehicle-mounted controller, timing when the vehicle position information matches the preset racetrack ending position for the Nth time, wherein N is an integer greater than 1.

8. The racetrack timing method according to claim 1, wherein the preset racetrack timing position further comprises a preset turn timing position and/or a preset road section timing position, and the method further comprises:
obtaining, by the vehicle-mounted controller, timing data of the vehicle according to a timing time when the vehicle position information matches the preset racetrack timing position;
wherein the timing data comprises at least one of a single turn consuming time of the vehicle, a total racetrack consuming time of the vehicle, and a consuming time spent by the vehicle on each road section.

9. The racetrack timing method according to claim 1, wherein the preset racetrack information further comprises racetrack boundary information, and the method further comprises:
determining, by the vehicle-mounted controller, whether the vehicle exceeds a racetrack boundary according to the racetrack boundary information and a moving trajectory of the vehicle during a timing period; and
executing a prompt operation or an invalid operation if the vehicle exceeds the racetrack boundary.

10. A storage medium, storing a computer program, wherein the computer program, when executed by a processor, implements the steps of the racetrack timing method according to any one of claims 1 to 9.

11. A racetrack timing system, comprising: a vehicle-mounted positioner, a control unit and a cockpit host;
wherein the vehicle-mounted positioner is configured to obtain vehicle position information regarding a current position of a vehicle in real time, and send the vehicle position information to the control unit;
the control unit comprises an underlying router and a main controller, wherein the underlying router is configured to send the vehicle position information to the main controller or the vehicle-mounted controller, and the main controller is configured to process the vehicle position information and send the processed vehicle position information to the vehicle-mounted controller;
the cockpit host comprises a vehicle-mounted controller and a vehicle-mounted displayer, wherein the vehicle-mounted controller is configured to determine whether the vehicle position information or the processed vehicle position matches a preset racetrack timing position at a preset racetrack, perform a timing operation once the vehicle position information or the processed vehicle position matches the preset racetrack timing position, obtain timing data of the vehicle according to a timing time when the vehicle position information or the processed vehicle position matches the preset racetrack timing position, and send the timing data to the vehicle-mounted displayer, wherein the vehicle-mounted displayer is configured to display the timing data.

12. A racetrack timing system, used in a vehicle, and comprising:
a vehicle-mounted positioner, configured to obtain vehicle position information regarding a current position of the vehicle in real time, and send the vehicle position information to a vehicle-mounted controller; and
the vehicle-mounted controller, configured to determine whether the vehicle position information matches a preset racetrack timing position at a preset racetrack; and perform a timing operation once the vehicle position information matches the preset racetrack timing position.

13. A racetrack timing apparatus, used in a vehicle, and comprising:
a positioning module, configured to obtain vehicle position information regarding a current position of the vehicle in real time; and
a control module, configured to determine whether the vehicle position information matches a preset racetrack timing position at a preset racetrack;
the control module is further configured to perform a timing operation once the vehicle position information matches the preset racetrack timing position.

14. A vehicle, comprising the racetrack timing system according to claim 11 or 12.
